# EUROPÄISCHE PATENTSCHRIFT

(11) **EP 4 205 252 B1**
(45) Veröffentlichungstag und Bekanntmachung des Hinweises auf die Patenterteilung: **04.11.2026**
(21) Anmeldenummer: 21758696.5
(22) Anmeldetag: 11.08.2021
(51) Int. Cl.: H02J 3/32, H02J 3/38, H02M 1/32

(54) **VERFAHREN ZUM BETRIEB EINES BATTERIEWANDLERS, BATTERIEWANDLER UND SYSTEM**
METHOD FOR OPERATING A BATTERY CONVERTER, BATTERY CONVERTER AND SYSTEM
PROCÉDÉ DE FONCTIONNEMENT D'UN CONVERTISSEUR DE BATTERIE, CONVERTISSEUR DE BATTERIE ET SYSTÈME

(30) Priorität: 31.08.2020 DE 102020122686
(43) Veröffentlichungstag der Anmeldung: 05.07.2023
(73) Patentinhaber: SMA Solar Technology AG, 34266 Niestetal (DE)
(72) Erfinder: UNRU, Alexander, 34225 Baunatal (DE)
(86) Internationale Anmeldenummer: PCT/EP2021/072424
(87) Internationale Veröffentlichungsnummer: WO 2022/043066

(56) Entgegenhaltungen:
- WO-A2-2011/154306
- DE-A1- 102018 119 957
- JIANFANG XIAO ET AL: "Multi-level control of grid-tied DC microgrids", 2013 IEEE PES ASIA-PACIFIC POWER AND ENERGY ENGINEERING CONFERENCE (APPEEC), IEEE, 8 December 2013 (2013-12-08), pages 1 - 6, XP032606891, DOI: 10.1109/APPEEC.2013.6837150
- DUNG H PHAM ET AL: "Microgrid topology for different applications in Vietnam", UNIVERSITIES POWER ENGINEERING CONFERENCE (AUPEC), 2012 22ND AUSTRALASIAN, IEEE, 26 September 2012 (2012-09-26), pages 1 - 6, XP032271798, ISBN: 978-1-4673-2933-0

## Beschreibung

Die Erfindung betrifft ein Verfahren zum Betrieb eines Batteriewandlers, einen Batteriewandler, der zur Ausführung des Verfahrens eingerichtet ist und ein System mit einem derartigen Batteriewandler.

Batteriewandler nach dem Stand der Technik sind unter anderem aus den folgenden Dokumenten bekannt: WO 2011/154306A2, DE102018119957A1, JIANFANG XIAO ET AL: "Multi-level control of grid-tied DC microgrids": XP032606891 und DUNG H PHAM ET AL: "Microgrid topology for different applications in Vietnam": XP032271798.

Zum Betrieb von DC-Lasten in einem System, beispielsweise in einer industriellen Produktionsanlage, werden die DC-Lasten über einen gemeinsamen DC-Bus versorgt. Dieser DC-Bus wird häufig über einen Wechselrichter mit einem AC-Netz verbunden, um den zum Betrieb der DC-Lasten erforderliche Leistungsaustausch sicherzustellen. Hierbei stellt der Wechselrichter sicher, dass die Spannung des DC-Busses als Zwischenkreisspannung eines Zwischenkreises, über den der Wechselrichter mit dem DC-Bus verbunden ist, in einem zulässigen Spannungsbereich um einen vorgegebenen DC-Sollwert verbleibt. Zusätzlich weisen solche Systeme häufig Batteriewandler auf, die kurzzeitige Regelreserve für Spannungsschwankungen bereitstellen, die über die Kapazität des Wechselrichters hinausgeht oder die dadurch verursacht werden, dass der Wechselrichter über die Regelung der DC-Busspannung hinaus weitere Regelungsziele verfolgt, insbesondere Netzdienstleistungen wie eine Frequenz- oder Spannungsstabilisierung des angeschlossenen Netzes bereitstellt. Der Batteriewandler bestimmt hierbei die Austauschleistung mit dem DC-Bus zumeist über eine vorgegebene Wandler-Kennlinie, die den Sollwert der Austauschleistung als Funktion der Zwischenkreisspannung vorgibt. Die Steuerung des Batteriewandlers stellt die Austauschleistung dann entsprechend des Sollwerts ein. In der Regel weist die Wandler-Kennlinie ein Totband um den DC-Sollwert der DC-Busspannung auf, in dem der Batteriewandler inaktiv ist. Im Rahmen dieser Offenbarung werden unter dem Begriff DC-Last nicht nur reine Verbraucher verstanden, vielmehr sind auch solche Komponenten mit umfasst, die dem DC-Bus zeitweise oder dauerhaft Leistung zuführen.

Um einen effizienten Betrieb des Systems zu ermöglichen, ist es wünschenswert, den DC-Sollwert der DC-Busspannung nur geringfügig über einen Gleichrichtwert des an den Wechselrichter angeschlossenen AC-Netzes zu legen, da hierdurch die Wandlerverluste des Wechselrichters verringert werden können.

Gleichzeitig besteht zunehmend die Anforderung an ein vorstehend beschriebenes System, netzstützende Dienstleistungen für das Netz zu erbringen. Als Teil dieser netzstützenden Funktion ist es erforderlich, dass der Wechselrichter im Fall eines Zusammenbrechens der Netzspannung zumindest für eine vorgegebene Zeit versucht, das Netz durch phasenrichtige Einspeisung relativ hoher Ströme beim Wiederaufbau der Netzspannung auf dem Netz zugeordnete Sollwerte (z.B. Spannungsamplitude, Frequenz) zu unterstützen. Dieses Verhalten wird als FRT (Fault-Ride-Through) bezeichnet. Hierbei ergibt sich bei Wechselrichtern, die DC-seitig auch eine DC-Busspannung stellen, nach dem Stand der Technik die Konsequenz, dass der Zwischenkreis erheblich entladen wird und die Spannung des DC-Busses unter den Gleichrichtwert des Nennwerts der Netzspannung absinkt. Einem solchen Absinken der DC-Busspannung kann durch Batteriewandler, die über konventionelle Wandler-Kennlinien gesteuert werden, insbesondere dann nicht ausreichend entgegengewirkt werden, wenn der DC-Sollwert nur geringfügig über dem Gleichrichtwert liegt.

Wenn die DC-Busspannung unter den genannten Gleichrichtwert gesunken ist, kann eine plötzlich vollständig zurückkehrende Netzspannung dazu führen, dass unkontrolliert derart hohe Ströme über die Freilaufdioden der Brückenschaltung des Wechselrichters in den entladenen Zwischenkreis des DC-Busses fließen, dass diese zerstört werden.

Daher ist es Aufgabe dieser Erfindung, in einem System umfassend einen spannungsstellenden Wechselrichter, eine DC-Last und einen Batteriewandler mit angeschlossener Batterie die Regelung des Batteriewandlers derart anzupassen, dass eine im FRT-Fall plötzlich wiederkehrende Netzspannung das System nicht beschädigt.

Diese Aufgabe wird gelöst durch ein Verfahren mit den Merkmalen des unabhängigen Anspruchs 1, sowie durch einen Batteriewandler mit den Merkmalen des Anspruchs 8, beziehungsweise einem System mit den Merkmalen des Anspruchs 9. Bevorzugte Ausführungsformen werden in den abhängigen Ansprüchen beschrieben.

In einem Aspekt umfasst ein erfindungsgemäßes Verfahren zum Betrieb eines Batteriewandlers in einem System, bei dem an einem gemeinsamen Zwischenkreis über einen DC-Bus neben dem Batteriewandler ein mit einem Netz verbundener Wechselrichter und eine DC-Last angeschlossen sind, die Schritte:
- Regeln einer Austauschleistung des Batteriewandlers mit einer an den Batteriewandler angeschlossenen Batterie in Abhängigkeit einer Spannung des Zwischenkreises entsprechend einer Wandler-Kennlinie,
- Erkennen eines Abfalls der Zwischenkreisspannung unter einen Gleichrichtwert der zulässigen Wechselspannung des an den Wechselrichter angeschlossenen Netzes, und
- falls der Abfall erkannt wird, ein zeitweises Verschieben der Wandler-Kennlinie, so dass eine maximale Entladeleistung des Batteriewandlers bei einem Wert der Zwischenkreisspannung erreicht wird, der oberhalb oder bei dem Gleichrichtwert liegt.

Durch das Erkennen des Abfalls kann der Batteriewandler eigenständig und ohne explizites Signal von außen erkennen, dass die Möglichkeit besteht, dass das System mit einem FRT-Fall konfrontiert sein könnte. In diesem Fall wird das Regelverhalten des Batteriewandlers dahingehend verändert, dass dieser für einen vorgegebenen Zeitraum die Spannung des DC-Busses in einem Spannungsbereich zu halten versucht, der oberhalb des Gleichrichtwerts der zulässigen Wechselspannung des angeschlossenen Netzes liegt. Somit wird der Gefahr entgegengewirkt, dass eine Beschädigung des Wechselrichters durch ein plötzliches Wiederkehren der zulässigen Netzspannung nach Ende des FRT-Falls verursacht wird. Im normalen Betriebsfall, also auch direkt vor Erkennen des Abfalls, ist es Aufgabe des Wechselrichters, die Spannung des DC-Busses innerhalb des zulässigen Spannungsbereichs zu halten, indem er eine entsprechende Austauschleistung zwischen DC-Bus und Netz bereitstellt. Der Batteriewandler unterstützt diese Regelung mit Hilfe der Wandler-Kennlinie.

In einer bevorzugten Ausführungsform wird die Wandler-Kennlinie bei Erkennen des Abfalls derart verschoben, dass ein Entladen der Batterie mit einer maximalen Entladeleistung für Werte der Zwischenkreisspannung erfolgt, die kleiner oder gleich einer um mindestens 10%, oberhalb des Gleichrichtwert liegenden Grenzspannung liegt. Hierdurch wird eine zusätzliche Sicherheitsmarge geschaffen, die zum Beispiel den Fall absichert, dass bei Wiederkehr der Netzspannung ein kurzzeitiges Überschießen einer Spannungsamplitude über den zulässigen Wert stattfindet. Auch eine kurzzeitig erhöhte Leistungsaufnahme aus dem DC-Bus durch die DC-Last oder den Wechselrichter oder andere Komponenten kann besser ausgeglichen werden.

Für solche Fälle kann die Regelreserve des Batteriewandlers während der Reaktion auf einen Abfall der Busspannung weiter verbessert werden, indem die Wandler-Kennlinie derart verschoben wird, dass eine maximale Entladeleistung der verschobenen Wandler-Kennlinie um mindestens 20%, bevorzugt um mindestens 50% oberhalb einer maximal zulässigen Dauerentladeleistung des Batteriewandlers liegt. Da diese maximale Entladeleistung nur kurzzeitig zur Verfügung gestellt wird, kann der Batteriewandler diese Überlast schadlos verkraften.

Bevorzugt weist die Wandler-Kennlinie vor dem Verschieben ein Totband um einen DC-Sollwert der Zwischenkreisspannung auf, und die verschobene Wandler-Kennlinie ist totbandfrei. Ein Totband in der verschobenen Kennlinie würde die Regelcharakteristik des Wandlers in dieser Situation nur verschlechtern beziehungsweise den Spannungsbereich, in dem der Batteriewandler auf der Basis der verschobenen Kennlinie regelt, unnötig verbreitern, während das Totband im Normalbetrieb eine wesentliche Entlastung für den Batteriewandler und die daran angeschlossene Batterie darstellt.

Vorteilhaft wird die Wandler-Kennlinie für eine erste Zeitdauer verschoben, die in Abhängigkeit von einer zweiten Zeitdauer für ein FRT des Systems, insbesondere größer oder gleich der zweiten Zeitdauer gewählt ist. Damit ist sichergestellt, dass der Batteriewandler seine DC-Bus-stützende Funktion während des gesamten FRT-Falls bereitstellt. Hierbei umfasst die zweite Zeitdauer des FRT-Falls nicht nur eine Phase, in der der Wechselrichter aktiv versucht, das Netz zu stützen und geeignet Leistung mit dem Netz auszutauschen, sondern auch gegebenenfalls eine Phase, in der der Wechselrichter passiv mit dem Netz verbunden bleibt, ohne dass beispielsweise die Brückenschalter aktiv getaktet werden. Eine solche passive Phase kann auch ohne vorherige aktive Stützungsphase den FRT-Fall abbilden und mehrere Minuten dauern. Bei Rückkehr des Netzes innerhalb dieser Zeitdauer kann der Wechselrichter ohne Verzögerung durch einen erneut erforderlichen Verbindungsvorgang mit dem Netz wieder aktiv werden und einen geeignet geregelten Leistungsaustausch mit dem Netz bereitstellen.

Nach Ablauf der zweiten Zeitdauer würde der FRT-Fall erfolgreich geklärt sein, oder der Wechselrichter würde sich vom angeschlossenen Netz trennen. Auf diese Weise besteht die Möglichkeit, dass das System zumindest eine gewisse Zeit mithilfe des Batteriewandlers weiterbetrieben wird. Dieser Weiterbetrieb kann grundsätzlich durch den Batteriewandler unter Verwendung der verschobenen Kennlinie, aber insbesondere nach Trennung des Wechselrichters vom Netz auch durch die ursprüngliche Wandler-Kennlinie unterstützt werden.

In einem weiteren Aspekt der Erfindung weist ein Batteriewandler neben einem Eingang zum Anschluss einer Batterie eine Steuerung auf, die dazu eingerichtet ist, eine Austauschleistung an einem Ausgang in Abhängigkeit der am Ausgang anliegenden Spannung in Abhängigkeit einer Wandler-Kennlinie bereitzustellen. Die Steuerung ist weiterhin dazu eingerichtet, einen Abfall der am Ausgang anliegenden Spannung unter einen Gleichrichtwert der zulässigen Wechselspannung des an den Wechselrichter angeschlossenen Netzes zu erkennen und, falls der Abfall erkannt wird, die Wandler-Kennlinie zeitweise zu verschieben, so dass eine maximale Entladeleistung des Batteriewandlers bei einem Wert der am Ausgang anliegenden Spannung erreicht wird, der oberhalb oder bei dem Gleichrichtwert liegt. Es ergeben sich die im Rahmen des vorstehend beschriebenen Verfahrens aufgezeigten Vorteile.

In einem erfindungsgemäßen System ist ein solcher Batteriewandler mit seinem Ausgang über einen DC-Bus an einem gemeinsamen Zwischenkreis angeschlossen. An den Zwischenkreis ist weiterhin eine DC-Last und ein Wechselrichter anschlossen. Der Wechselrichter ist insbesondere hierbei dazu eingerichtet, ausgangsseitig an ein Netz angeschlossen zu werden, und den Zwischenkreis beziehungsweise den DC-Bus über das Netz derart mit Austauschleistung zu versorgen, dass der DC-Bus innerhalb eines zulässigen Spannungsbereichs betrieben wird. Der Batteriewandler unterstützt den Wechselrichter insbesondere hierbei, indem er eine weitere Austauschleistung mit einer angeschlossenen Batterie entsprechend einer vorgegebenen Wandler-Kennlinie bereitstellt. Eine direkte Kommunikation zwischen Wechselrichter und Batteriewandler ist hierbei zum Erreichen des gemeinsamen Regelungsziels nicht erforderlich.

Im Folgenden wird die Erfindung mithilfe von Figuren dargestellt, von denen
- Fig. 1: ein System zur Ausführung des erfindungsgemäßen Verfahrens,
- Fig. 2: ein Ablaufdiagramm des erfindungsgemäßen Verfahrens, und
- Fig. 3: eine Wandler-Kennlinie und deren Verschiebung im Rahmen der Ausführung des erfindungsgemäßen Verfahrens zeigen.

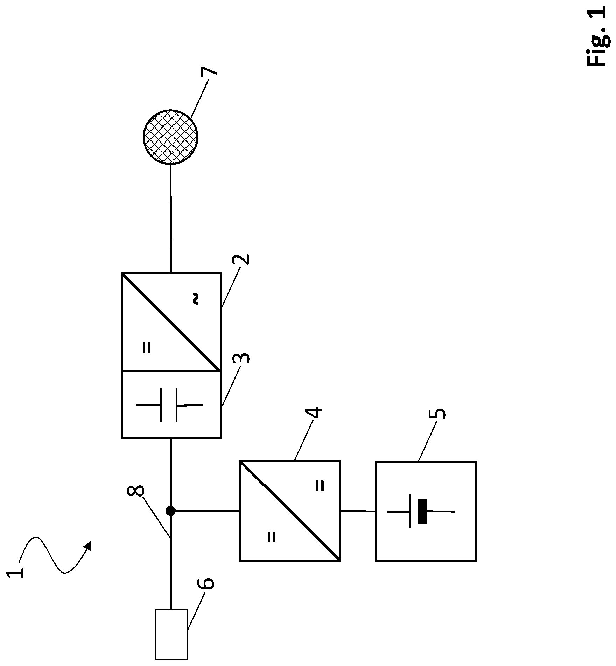

Fig. 1 zeigt eine erfindungsgemäße Ausführung eines Systems 1 mit einem Wechselrichter 2, der AC-seitig an ein Netz 7 und DC-seitig über einen Zwischenkreis 3 an einen DC-Bus 8 angeschlossen ist. Im gezeigten Beispiel ist der Zwischenkreis 3 Teil des Wechselrichters, er kann aber auch eine eigenständige Komponente des Systems 1 sein. An den DC-Bus 8 ist weiterhin eine DC-Last 6 angeschlossen, die über den DC-Bus 8 mit elektrischer Leistung versorgt wird. Zum Ausgleich von Schwankungen in der Leistungsaufnahme der Lasten und den damit verbundenen Spannungsschwankungen des DC-Busses 8 ist weiterhin an den DC-Bus 8 über einen Batteriewandler 4 eine Batterie 5 angeschlossen. Die Steuerung des Batteriewandlers 4 erfolgt über eine Wandler-Kennlinie, die zu jedem Wert der DC-Busspannung einen Sollwert für eine Austauschleistung mit der Batterie 5 vorgibt. Die Austauschleistung des Batteriewandlers 4 wird durch eine Steuerung entsprechend des Sollwerts eingestellt. Die Wandler-Kennlinie muss hierbei nicht notwendigerweise zeitlich konstant sein, sondern kann beispielsweise als Funktion des Ladezustands der Batterie 5 angepasst werden, um einen gewünschten Ladezustand der Batterie 5 anzustreben.

Weiterhin ist die Steuerung dazu eingerichtet ist, einen Abfall der am DC-Bus 8 anliegenden Spannung unter einen Gleichrichtwert der zulässigen Wechselspannung des an den Wechselrichter 2 angeschlossenen Netzes 7 zu erkennen und falls der Abfall erkannt wird, die Wandler-Kennlinie zeitweise zu verschieben, so dass eine maximale Entladeleistung des Batteriewandlers 4 bereits bei einem Wert der am Ausgang anliegenden Spannung erreicht wird, der oberhalb oder bei dem Gleichrichtwert 12 liegt. Ein solcher Abfall kann durch einen FRT-Fall ausgelöst sein, der eine Sonderbetriebssituation des Systems 1 darstellt. Die Zeitdauer, während der die verschobene Kennlinie vom Batteriewandler zur Steuerung seiner Austauschleistung mit dem DC-Bus verwendet wird, kann bevorzugt entsprechend der Zeitdauer gewählt werden, während der der Wechselrichter 2 beispielsweise aufgrund von Vorgaben des Netzbetreibers versucht, ein FRT durchzuführen, um einen Spannungsabfall im Netz auszugleichen. Der Batteriewandler 4 unterstützt auf diese Weise die Durchführung des FRT, ohne dass es einer direkten Kommunikation zwischen dem Wechselrichter 2 und dem Batteriewandler 4 bedarf.

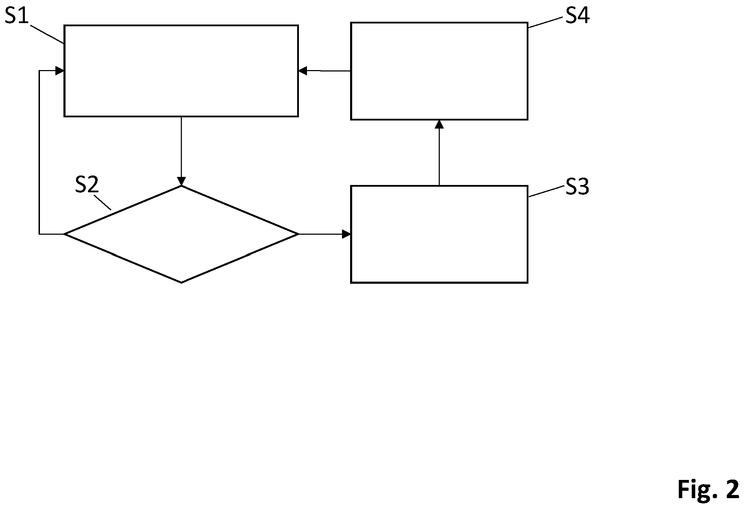

In Fig. 2 ist ein Ablaufdiagramm für das erfindungsgemäße Verfahren gezeigt. In einem ersten Schritt S1 erfolgt ein Regeln einer Austauschleistung des Batteriewandlers mit einer an den Batteriewandler angeschlossenen Batterie in Abhängigkeit einer Spannung des Zwischenkreises entsprechend einer Wandler-Kennlinie. Dies entspricht einem normalen Betriebsmodus des Batteriewandlers. In einem zweiten Schritt S2 prüft der Batteriewandler die Spannung an seinem mit dem Zwischenkreis verbundenen Ausgangsanschlüssen, ob ein Abfall der Zwischenkreisspannung unter einen Gleichrichtwert der zulässigen Wechselspannung des an den Wechselrichter angeschlossenen Netzes vorliegt. Sofern kein solcher Abfall erkannt wird, kehrt das Verfahren zum ersten Schritt S1 zurück.

Falls der Abfall erkannt wird, erfolgt in einem dritten Schritt S3 ein Verschieben der Wandler-Kennlinie um einen vorgegebenen Spannungswert, so dass eine kennliniengemäße Austauschleistung bei einer um den vorgegebenen Spannungswert erhöhten Zwischenkreisspannung erreicht wird. In einem vierten Schritt S4 wird der Batteriewandler mit der verschobenen Kennlinie für eine vorgegebene Zeit betrieben, bevor die Wandler-Kennlinie wieder auf die ursprüngliche Kennlinie des normalen Betriebsmodus zurückgesetzt wird und das Verfahren zum ersten Schritt S1 zurückkehrt. Diese vorgegebene Zeit kann entsprechend der maximalen Zeitdauer gewählt werden, die der spannungsstellende Wechselrichter im FRT-Modus betrieben wird, so dass der Batteriewandler während des gesamten FRT-Falls die Spannung des Zwischenkreises mit Hilfe der verschobenen Wandler-Kennlinie stützt. Auch sofern andere Gründe zum vorübergehenden Absenken der Zwischenkreisspannung geführt haben, wird die vorübergehenden Verschiebung der Kennlinie durchgeführt.

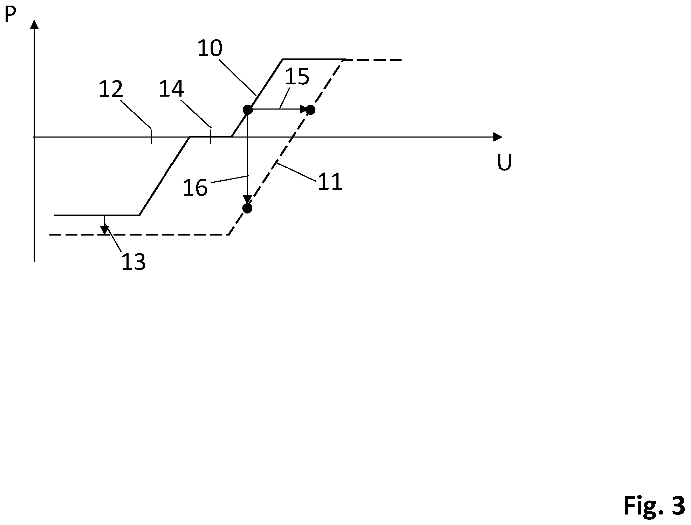

In Fig. 3 ist eine Wandler-Kennlinie 10 gezeigt, bei der der Sollwert einer Austauschleistung P als Funktion der Spannung U an den mit dem DC-Bus zu verbindenden Ausgangsanschlüssen eines Batterie-Wandlers dargestellt ist. Die Wandler-Kennlinie 10 weist um einen DC-Sollwert 14 herum ein Totband mit konstanter Leistung - hier Null - auf, an den sich beidseitig Bereiche anschließen, in denen die Austauschleistung P mit zunehmender Spannung in Richtung erhöhter Ladeleistung zunimmt (beziehungsweise die Entladeleistung abnimmt). Diese Bereiche enden bei Erreichen der maximal zulässigen Dauerladeleistung beziehungsweise für abnehmende Spannung der maximal zulässigen Dauerentladeleistung, die jeweils nicht überschritten werden. Hierdurch ergibt sich ein Spannungsbereich mit variabler Austauschleistung des Batteriewandlers, wobei der Gleichrichtwert 12 der zulässigen Wechselspannung des angeschlossenen Netzes im dargestellten Fall innerhalb dieses Spannungsbereichs liegt.

Wenn der Batteriewandler einen Abfall der Spannung an dessen Ausgangsanschlüssen erkennt, verwendet der Batteriewandler temporär anstelle der Wandler-Kennlinie 10 eine verschobene Kennlinie 11. Die verschobene Kennlinie 11 zeichnet sich dadurch gegenüber der Wandler-Kennlinie 10 aus, dass für jeden Wert einer Austauschleistung P zwischen der maximal zulässigen Dauerladeleistung und der maximal zulässigen Dauerentladeleistung der zugeordnete Wert der DC-Busspannung U für die verschobene Kennlinie 11 höher oder bestenfalls gleich ist als für die Wandler-Kennlinie 10. Gleichzeitig wird bereits eine maximale Entladeleistung des Batteriewandlers bei einem Wert der DC-Busspannung erreicht wird, der oberhalb oder bei dem Gleichrichtwert 12 liegt. Der Batteriewandler arbeitet auf diese Weise im Rahmen seiner Möglichkeiten gegen einen Abfall der DC-Busspannung unter den Gleichrichtwert12.

Die verschobene Kennlinie 11 zeigt anders als die Wandler-Kennlinie 10 kein Totband. Optional kann die verschobene Kennlinie eine maximale Entladeleistung aufweisen, die um eine Überlast 13 erhöht gegenüber der maximal zulässigen Dauerentladeleistung ist. Da die verschobene Kennlinie 11 nur für eine vorgegebene Zeitdauer verwendet wird, kann die Spannung des DC-Busses zusätzlich durch die Überlast 13 gestützt werden, ohne dass die Gefahr einer Beschädigung des Batteriewandlers besteht. Bevorzugt sollte die Spannung, bei der die verschobene Kennlinie 11 eine maximale Entladeleistung erreicht, innerhalb des zulässigen Spannungsbereichs des DC-Busses liegen.

Die in Fig. 3 gezeigten Kennlinien spiegeln nur Beispiele von Verläufen von Wandler-Kennlinien und verschobenen Kennlinien wider. Die Verläufe haben beispielsweise nicht notwendigerweise linear verlaufende Abschnitte und die Steigungen der verschobenen Kennlinie müssen nicht notwendig den Steigungen der Wandler-Kennlinie entsprechen. Für jeden Wert einer Austauschleistung P zwischen der maximal zulässigen Dauerladeleistung und der maximal zulässigen Dauerentladeleistung liegt die zugeordnete Spannung U der verschobenen Kennlinie über der zugeordneten Spannung U der Wandler-Kennlinie. Dies ist durch einen Pfeil als Verschiebung 15 gekennzeichnet. Alternativ gilt, dass für jeden Spannungswert U der beiden Kennlinien der zugeordnete Leistungswert P der verschobenen Kennlinie einen gegenüber der Wandler-Kennlinie in Richtung einer stärkeren Entladung beziehungsweise einer geringen Ladung verschobenen Leistungswert aufweist beziehungsweise beide Kennlinien bestenfalls dann gleiche Leistungswerte aufweisen, wenn der Leistungswert P der maximal zulässigen Dauerladeleistung oder der maximal zulässigen Dauerentladeleistung entspricht. Dies ist durch einen Pfeil als Verschiebung 16 gekennzeichnet.

### Bezugszeichenliste

- 1: System
- 2: Wechselrichter
- 3: Zwischenkreis
- 4: Batteriewandler
- 5: Batterie
- 6: Last
- 7: Netz
- 8: DC-Bus
- 10: Kennlinie
- 11: Kennlinie
- 12: Gleichrichtwert
- 13: Überlast
- 14: DC-Sollwert
- 15: Verschiebung
- 16: Verschiebung
- S1 - S4: Schritt

## Patentansprüche

1. Verfahren zum Betrieb eines Batteriewandlers (4) in einem System (1), bei dem an einem gemeinsamen Zwischenkreis (3) über einen DC-Bus (8) neben dem Batteriewandler (4) ein mit einem Netz (7) verbundener Wechselrichter (2) und eine DC-Last (6) angeschlossen sind, wobei das Verfahren die Schritte umfasst:
- Regeln einer Austauschleistung des Batteriewandlers (4) mit einer an den Batteriewandler (4) angeschlossenen Batterie (5) in Abhängigkeit einer Spannung des Zwischenkreises (3) entsprechend einer Wandler-Kennlinie (10),
- Erkennen eines Abfalls der Zwischenkreisspannung unter einen Gleichrichtwert (12) der zulässigen Wechselspannung des an den Wechselrichter (2) angeschlossenen Netzes (7), und
- falls der Abfall erkannt wird, zeitweises Verschieben der Wandler-Kennlinie, so dass eine maximale Entladeleistung des Batteriewandlers (4) bei einem Wert der Zwischenkreisspannung erreicht wird, der oberhalb oder bei dem Gleichrichtwert (12) liegt.

2. Verfahren nach Anspruch 1, wobei die Wandler-Kennlinie (10) derart verschoben wird, dass ein Entladen der Batterie mit einer maximalen Entladeleistung für Werte der Zwischenkreisspannung erfolgt, die kleiner oder gleich einer um mindestens 10%, oberhalb des Gleichrichtwert (12) liegenden Grenzspannung liegt.

3. Verfahren nach Anspruch 1 oder 2, wobei die Wandler-Kennlinie (10) vor dem Verschieben ein Totband um einen DC-Sollwert (14) der Zwischenkreisspannung aufweist, an den sich beidseitig Bereiche anschließen, in denen die Austauschleistung P mit zunehmender Spannung in Richtung erhöhter Ladeleistung zunimmt, und die Bereiche individuell derart verschoben werden, dass die verschobene Wandler-Kennlinie (11) totbandfrei ist.

4. Verfahren nach einem der vorhergehenden Ansprüche, wobei die Wandler-Kennlinie (10) derart verschoben wird, dass eine maximale Entladeleistung der verschobenen Wandler-Kennlinie (11) um mindestens 20% oberhalb einer maximal zulässigen Dauerentladeleistung des Batteriewandlers (4) liegt.

5. Verfahren nach Anspruch 4, wobei die maximale Entladeleistung der verschobenen Wandler-Kennlinie (11) um mindestens 50% oberhalb der maximal zulässigen Dauerentladeleistung des Batteriewandlers (4) liegt.

6. Verfahren nach einem der vorhergehenden Ansprüche, wobei die Wandler-Kennlinie (10) für eine erste Zeitdauer verschoben wird, die in Abhängigkeit von einer zweiten Zeitdauer für ein Fault-Ride-Through des Systems (1 gewählt ist.

7. Verfahren nach Anspruch 6, wobei die erste Zeitdauer größer oder gleich der zweiten Zeitdauer gewählt ist.

8. Batteriewandler (4) mit einem Eingang zum Anschluss einer Batterie (5) und mit einer Steuerung, die dazu eingerichtet ist, eine Austauschleistung an einem Ausgang in Abhängigkeit der am Ausgang anliegenden Spannung in Abhängigkeit einer Wandler-Kennlinie (10) bereitzustellen, wobei die Steuerung weiterhin dazu eingerichtet ist, einen Abfall der am Ausgang anliegenden Spannung unter einen Gleichrichtwert (12) der zulässigen Wechselspannung des an den Wechselrichter (2) angeschlossenen Netzes (7) zu erkennen und falls der Abfall erkannt wird, die Wandler-Kennlinie zeitweise zu verschieben, so dass eine maximale Entladeleistung des Batteriewandlers (4) bei einem Wert der am Ausgang anliegenden Spannung erreicht wird, der oberhalb oder bei dem Gleichrichtwert (12) liegt.

9. System (1), umfassend:
- eine DC-Last (6)
- einen Wechselrichter (2) und
- einen Batteriewandler (4) nach Anspruch 6,
wobei die DC-Last (8), der Wechselrichter (2) und der Batteriewandler (4) über einen DC-Bus (8) an einem gemeinsamen Zwischenkreis (3) angeschlossen sind.

## Claims

1. A method for operating a battery converter (4) in a system (1) in which, in addition to the battery converter (4), an inverter (2) connected to a grid (7), and a DC load (6) are connected to a common intermediate circuit (3) via a DC bus (8), wherein the method comprises the following steps:
- controlling an exchange power of the battery converter (4) using a battery (5) connected to the battery converter (4), depending on a voltage of the intermediate circuit (3) in accordance with a converter characteristic curve (10),
- identifying a decrease in the intermediate circuit voltage below a rectifying value (12) of the permissible AC voltage of the grid (7) connected to the inverter (2), and
- if the decrease is identified, temporarily shifting the converter characteristic curve so that a maximum discharging power of the battery converter (4) is reached at a value of the intermediate circuit voltage that is above or at the rectifying value (12).

2. The method according to claim 1, wherein the converter characteristic curve (10) is shifted in such a way that the battery is discharged with a maximum discharging power for values of the intermediate circuit voltage less than or equal to a limit voltage which is at least 10% above the rectifying value (12).

3. The method according to claim 1 or 2, wherein the converter characteristic curve (10) comprises a dead-band around a DC nominal value (14) of the intermediate circuit voltage before the shifting, flanked on both sides by regions in which the exchanged power P increases with rising voltage toward higher charging power, and the regions are individually shifted such that the shifted converter characteristic curve is dead-band-free.

4. The method according to any one of the preceding claims, wherein the converter characteristic curve (10) is shifted in such a way that a maximum discharging power of the shifted converter characteristic curve (11) is at least 20% above a maximum permissible continuous discharging power of the battery converter (4).

5. The method according to claim 4, wherein the maximum discharging power of the shifted converter characteristic curve (11) is at least 50% above the maximum permissible continuous discharging power of the battery converter (4).

6. The method according to any one of the preceding claims, wherein the converter characteristic curve (10) is shifted for a first time period which is selected depending on a second time period of a fault ride-through of the system (1).

7. The method according to claim 6, wherein the first time period is selected to be greater than or equal to the second time period.

8. A battery converter (4) comprising an input for connecting a battery (5) and comprising a controller configured to provide an exchange power at an output depending on the voltage applied at the output depending on a converter characteristic curve (10), wherein the controller is further configured to identify a decrease in the voltage applied at the output below a rectifying value (12) of the permissible AC voltage of the grid (7) connected to the inverter (2), and if the decrease is identified, to temporarily shift the converter characteristic curve so that a maximum discharging power of the battery converter (4) is reached at a value of the voltage applied at the output that is above or at the rectifying value (12).

9. A system (1), comprising:
- a DC load (6)
- an inverter (2) and
- a battery converter (4) according to claim 8,
wherein the DC load (8), the inverter (2) and the battery converter (4) are connected via a DC bus (8) to a common intermediate circuit (3).

## Revendications

1. Procédé de fonctionnement d'un convertisseur de batterie (4) dans un système (1), dans lequel sont raccordés à un circuit intermédiaire commun (3) via un bus CC (8), outre le convertisseur de batterie (4), un onduleur (2) relié à un réseau (7) et une charge CC (6), le procédé comprenant les étapes suivantes :
- la régulation d'une puissance d'échange du convertisseur de batterie (4) avec une batterie (5) raccordée au convertisseur de batterie (4) en fonction d'une tension du circuit intermédiaire (3), conformément à une courbe caractéristique du convertisseur (10),
- détecter une chute de la tension du circuit intermédiaire en dessous d'une valeur de redressement (12) de la tension alternative admissible du réseau (7) raccordé à l'onduleur (2), et
- si cette chute est détectée, décaler temporairement la courbe caractéristique du convertisseur de manière à atteindre une puissance de décharge maximale du convertisseur de batterie (4) pour une valeur de la tension du circuit intermédiaire supérieure ou égale à la valeur redressement (12).

2. Procédé selon la revendication 1, dans lequel la courbe caractéristique du convertisseur (10) est décalée de telle sorte que la décharge de la batterie s'effectue avec une puissance de décharge maximale pour des valeurs de la tension du circuit intermédiaire qui sont inférieures ou égales à une tension limite située au moins 10 % au-dessus de la valeur redressement (12).

3. Procédé selon la revendication 1 ou 2, dans lequel la courbe caractéristique du convertisseur (10), avant son décalage, présente une bande morte autour d'une valeur de consigne en courant continu (14) de la tension du circuit intermédiaire, à laquelle se raccordent, de part et d'autre, des plages dans lesquelles la puissance d'échange P augmente avec la tension dans le sens d'une puissance de charge accrue, et où ces plages sont décalées individuellement de telle sorte que la courbe caractéristique du convertisseur décalée (11) ne comporte pas de bande morte.

4. Procédé selon l'une des revendications précédentes, dans lequel la courbe caractéristique du convertisseur (10) est décalée de telle sorte qu'une puissance de décharge maximale de la courbe caractéristique décalée du convertisseur (11) soit supérieure d'au moins 20 % à une puissance de décharge continue maximale admissible du convertisseur de batterie (4).

5. Procédé selon la revendication 4, dans lequel la puissance de décharge maximale de la courbe caractéristique du convertisseur décalée (11) est supérieure d'au moins 50 % à la puissance de décharge continue maximale admissible du convertisseur de batterie (4).

6. Procédé selon l'une des revendications précédentes, dans lequel la courbe caractéristique du convertisseur (10) est décalée pendant une première durée choisie en fonction d'une deuxième durée pour un « fault-ride-through » du système (1).

7. Procédé selon la revendication 6, dans lequel la première durée est choisie pour être supérieure ou égale à la deuxième durée.

8. Convertisseur de batterie (4) comportant une entrée pour le raccordement d'une batterie (5) et une commande agencée pour fournir une puissance d'échange à la sortie en fonction de la tension présente à la sortie, selon une courbe caractéristique du convertisseur (10), la commande étant en outre agencée pour détecter une chute de la tension présente à la sortie en dessous d'une valeur de redressement (12) de la tension alternative admissible du réseau (7) raccordé à l'onduleur (2) et, si cette chute est détectée, à décaler temporairement la courbe caractéristique du convertisseur, de sorte qu'une puissance de décharge maximale du convertisseur de batterie (4) soit atteinte pour une valeur de la tension présente à la sortie qui est supérieure ou égale à la valeur de redressement (12).

9. Système (1) comprenant :
- une charge CC (6)
- un onduleur (2) et
- un convertisseur de batterie (4) selon la revendication 6,
la charge CC (8), l'onduleur (2) et le convertisseur de batterie (4) étant raccordés via un bus CC (8) à un circuit intermédiaire commun (3).
